# EUROPÄISCHE PATENTSCHRIFT

(11) **EP 2 681 923 B1**
(45) Veröffentlichungstag und Bekanntmachung des Hinweises auf die Patenterteilung: **06.06.2018**
(21) Anmeldenummer: 12714235.4
(22) Anmeldetag: 02.03.2012
(51) Int. Cl.: H04N 21/4725, H04N 21/81, H04N 21/858

(54) **VORRICHTUNG UND VERFAHREN ZUM ZUGRIFF AUF DIGITALE MEDIEN**
SYSTEM AND METHOD TO ACCESS DIGITAL MEDIA
SYSTÈME ET MÉTHODE D'ACCÈS À DES DONNÉES MÉDIA NUMÉRIQUES

(30) Priorität: 04.03.2011 DE 102011013077; 21.07.2011 DE 102011079587
(43) Veröffentlichungstag der Anmeldung: 08.01.2014
(73) Patentinhaber: Vimantic GmbH, 10629 Berlin (DE)
(72) Erfinder: DAUB, Felix, 10629 Berlin (DE)
(74) Vertreter: Maikowski & Ninnemann Patentanwälte Partnerschaft mbB
(86) Internationale Anmeldenummer: PCT/EP2012/053673
(87) Internationale Veröffentlichungsnummer: WO 2012/119959

(56) Entgegenhaltungen:
- EP-A2- 1 304 876
- WO-A1-2010/047632
- GB-A- 2 464 685
- US-A1- 2002 083 469
- US-A1- 2008 288 974
- US-A1- 2010 235 865

## Beschreibung

Die Erfindung betrifft eine Wiedergabeeinheit nach dem Oberbegriff des Anspruchs 1, eine Vorrichtung zum Zugriff auf digitale Medien nach dem Oberbegriff des Anspruchs 6 sowie ein Verfahren zum Zugriff auf digitale Medien nach dem Oberbegriff des Anspruchs 8.

Eine Wiedergabeeinheit sowie eine Vorrichtung und ein Verfahren zum Zugriff auf digitale Medien dienen insbesondere der Wiedergabe digitaler Medien, zum Beispiel digitaler Medien in Form von Digitalfilmen oder in Form anderer multimedialer digitaler Medien. Eine Wiedergabeeinheit beinhaltet Mittel zum Zugriff auf diese digitalen Medien, wobei die digitalen Medien insbesondere auf einem ersten Computersystem vorgehalten werden können und über ein Netzwerk, zum Beispiel das Internet, bezogen werden. Die Wiedergabeeinheit kann zum Beispiel durch eine Abspiel-Software zur Wiedergabe von Filmen auf einem dritten Computersystem realisiert sein. Es sind verschiedene Abspiel-Softwareprodukte bekannt. Ein Beispiel einer sehr bekannten Abspiel-Software ist der Flash-Player, der sich in verschiedene Internet-Browser integrieren lässt.

Eine Wiedergabeeinheit in Form einer auf einem dritten Computersystem installierten Abspiel-Software verfügt über die Funktionen, die standardmäßig zur Medienwiedergabe erforderlich sind, wie zum Beispiel die Funktionen Start, Stopp, Pause oder die Lautstärkeregelung. Das wiederzugebende digitale Medium kann dabei auf einem ersten Computersystem gespeichert sein, das verschieden vom dritten Computersystem ist. Zum Zugriff auf das digitale Medium müssen die beiden Computersysteme über ein Netzwerk miteinander verbunden sein. Zur Medienwiedergabe wird ein Datenstrom zwischen den beiden Computersystemen etabliert, der den Inhalt des digitalen Mediums vom ersten Computersystem an das dritte Computersystem überträgt und von der Wiedergabeeinheit auf dem Bildschirm des dritten Computersystems angezeigt wird.

Bei dem dritten Computersystem kann es sich um einen Personalcomputer oder ein Laptop, aber auch um ein Smartphone oder einen Tablet PC oder ein andere elektronische Vorrichtung handeln, die geeignet ist, auf digitale Medien in einem Netzwerk zuzugreifen und diese wiederzugeben.

Die Vorrichtung weist über die reine Wiedergabe des digitalen Mediums hinaus die Möglichkeit auf, auf bei der Wiedergabe des digitalen Mediums sichtbare und ausgezeichnete Medienobjekte zuzugreifen. Hierzu ist eine Eingabeeinrichtung der Vorrichtung vorgesehen, mittels der bei der Wiedergabe des digitalen Mediums ein anhand seiner Positionsinformationen identifiziertes Medienobjekt selektiert werden kann, um Produktinformationen zum selektierten Medienobjekt anzufordern. Handelt es sich bei dem digitalen Medium um einen Digitalfilm, so kann es sich bei dem Medienobjekt zum Beispiel um einen im Digitalfilm vorkommenden Gegenstand handeln, der beworben werden soll.

Zu den Medienobjekten können Informationen abgerufen werden. Dies können Detailinformationen zum Medienobjekt sein. Dies können aber auch Informationen zu Produkten sein, die dem Medienobjekt gleichen oder ähneln. Auf diese Weise können Produkte beworben und ggf. zum Kauf angeboten werden.

Die Informationen werden dem Anwender nur dann angezeigt, wenn er deren Anzeige aktiv anfordert. Ein Anwender erhält während der Medienwiedergabe aber auch während einer Unterbrechung und nach Beendigung der Medienwiedergabe Mittel bereitgestellt, ein im digitalen Medium dargestelltes Medienobjekt auszuwählen und sich Produktangebote zu dem ausgewählten Medienobjekt anzeigen zu lassen. Neben den Produktinformationen kann das Produktangebot dem Anwender auch die direkte Möglichkeit zum Kauf des Produktes bieten. Die Vorrichtung ermöglicht die Verknüpfung von im digitalen Medium enthaltenen Medienobjekten mit aktuell angebotenen Produktinformationen. Dabei werden das digitale Medium sowie die Informationen zu im digitalen Medium enthaltenen Medienobjekten und die Produktinformationen in separaten Speichereinheiten vorgehalten und über Steuereinheiten zugreifbar gemacht, die beispielsweise in Form von Anwendungsprogrammen realisiert sein können.

Ein aktuelles technisches Problem besteht darin, sicherzustellen, dass auf ein digitales Medium nur von berechtigten Benutzern zugegriffen werden kann. Durch das Erstellen von Raubkopien und deren massenhafte Verbreitung über das Internet können Medienanbieter häufig ihre Rechte an dem digitalen Medium nicht hinreichend durchsetzen. Deshalb greifen Medienanbieter zu alternativen Vermarktungsformen, indem sie zum Beispiel Werbebotschaften in das digitale Medium einflechten, insbesondere einen digitalen Film mit Werbeeinblendungen versehen. Über die Werbung ergibt sich eine Einnahmequelle, über die der Film finanziert werden kann. Diese bekannte Werbestrategie hat jedoch den Nachteil, dass der Anwender alle enthaltenen Werdebotschaften konsumieren muss, unabhängig davon, ob diese Informationen für ihn nützlich, interessant oder gewünscht sind oder nicht. Darüber hinaus können Werbeinhalte schneller veralten als der eigentliche Inhalt des digitalen Mediums. Dies zwingt Medienanbieter dazu, die in das digitale Medium eingeflochtenen Werbebotschaften während der Lebensdauer des digitalen Mediums ständig zu aktualisieren.

Die Bereitstellung von Werbung zu digitalen Medien, die sich ein Betrachter bedarfsgerecht anzeigen lassen kann, ist bereits aus dem Stand der Technik bekannt.

US 2002/0083469 A1 beschreibt ein Verfahren und eine Vorrichtung zum Zugriff auf einen Videostream. Ein Videostream stellt ein digitales Medium dar. Während der Videostream auf einem Display ausgegeben wird, kann ein Betrachter ein darin gezeigtes Medienobjekt in Form eines Videoobjektes auswählen und sich zu diesem Produktinformationen, nämlich Multimedia-Werbung, anzeigen lassen. Die Multimedia-Werbung wurde bereits bei der Erstellung des Videos aufgezeichnet und ist als eingebettete Werbeinformation fest zu dem Videoobjekt gespeichert.

US 2008/0288974 A1 zeigt eine weitere Vorrichtung und ein Verfahren zum Zugriff auf einen Videostream. Auch hier kann sich ein Betrachter Werbeinformationen zu einem Videoobjekt aus dem laufenden Videostream anzeigen lassen. Die Werbeinformation ist ebenfalls in das Video eingebettet und dem Videoobjekt fest zugeordnet. Durch Angabe einer URL zu einer Werbeinformation kann eine gewisse Flexibilität der zugreifbaren Werbeinformation erreicht werden.

Auch EP 1304876 A2 offenbart eine Vorrichtung und ein Verfahren zum Zugriff auf einen Videostream. Ein Betrachter kann sich zusätzliche Informationen, wie Multimedia-Werbeinformationen, zu dem laufenden Videostream anzeigen lassen, indem er eine selektierbare Anzeigefläche des Videostreams auswählt. Die Werbeinformationen sind der selektierbaren Anzeigefläche fest zugeordnet. Die Multimedia-Werbeinformationen sind entweder in den Videostream eingebettet oder sie werden aus einer externen Datenquelle abgerufen.

Der Erfindung liegt das Problem zugrunde, eine Wiedergabeeinheit sowie eine Vorrichtung und ein Verfahren zum Zugriff auf digitale Medien der eingangs genannten Art zu schaffen, die eine flexible Zuordnung von Produktinformationen zu dem mindestens einem Medienobjekt ermöglicht, welches bei der Wiedergabe eines digitalen Mediums selektiert werden kann.

Dieses Problem wird gelöst durch die Schaffung einer Wiedergabeeinheit mit den Merkmalen des Patentanspruchs 1, einer Vorrichtung zum Zugriff auf digitale Medien mit den Merkmalen des Patentanspruchs 6 und einem Verfahren zum Zugriff auf digitale Medien mit den Merkmalen des Patentanspruchs 8.

Die erfindungsgemäße Lösung hat den Vorteil, dass die angebotene Produktinformation vom Anwender nicht als störende und ungewünschte Werbung verstanden wird, sondern als angenehme und praktische Zusatzfunktionalität. Die betrachtende Person entscheidet selbstständig, wann und in welchem Umfang sie Produktinformationen abruft. Die Möglichkeit für den Anwender ein interessantes Produkt direkt zu kaufen, auf das er während der Medienwiedergabe aufmerksam wurde, stellt zudem für den Anbieter des Produktes eine ganz neue Werbequalität dar. Da das digitale Medium und die Produktinformationen in verschiedenen Speichermedien vorgehalten werden, können Produktinformationen unabhängig vom digitalen Medium gepflegt und zeitaktuell angezeigt werden. Das digitale Medium selbst bleibt unverändert.

Es ist vorgesehen, dass neben den Positionsinformationen semantische Informationen zum Medienobjekt gespeichert werden. Diese semantischen Informationen charakterisieren das Medienobjekt. Für einen Gegenstand beinhalten die semantischen Informationen beispielsweise die Gegenstands-Kategorie, gegeben durch die Art des Gegenstandes, sowie Charakterisierungen des Gegenstandes durch seine Farbe, sein Material usw.. Neben den semantischen Informationen zum Medienobjekt sind auch semantische Informationen zu den Produkten verfügbar. Die semantischen Informationen zu den Produkten kategorisieren und charakterisieren das jeweilige Produkt. Die semantischen Informationen zu den Medienobjekten sowie zu den Produkten werden beispielsweise in einer semantischen Datenbank oder in einer relationalen Datenbank verwaltet. Die semantischen Informationen zu Medienobjekten und Produkten können je nach Ausgestaltung der Erfindung in zwei verschiedenen Datenbanken oder in einer gemeinsamen Datenbank verwaltet werden.

Entscheidet sich der Anwender dafür, zu einem selektierten Medienobjekt Produktangebote einzuholen, so werden ihm genau diejenigen Produkte angeboten, deren semantische Informationen mit den semantischen Informationen des ausgewählten Medienobjektes hinsichtlich eines Zuordnungsverfahrens übereinstimmen. Das Zuordnungsverfahren bewirkt, dass einem Medienobjekt die Produkte zugeordnet werden, die über die gleichen oder über ähnliche Charakterisierungen wie das Medienobjekt verfügen.

In einer Ausgestaltung der Erfindung erfolgt der Zugriff auf im digitalen Medium enthaltene Medienobjekte über die relative Anordnung bzw. Position des jeweiligen Medienobjektes innerhalb des Mediums zu jedem Zeitpunkt während der Medienwiedergabe. Diese Positionsinformation ist beispielsweise durch eine 3-dimensionale Orts-Koordinate (x, y, r) bestehend aus dem Schwerpunkt (x, y) des Medienobjektes und dem Radius r gegeben. Der Radius r stellt ein Maß für die Ausdehnung des Medienobjektes dar. Die Orts-Koordiante wird mit einem Zeitparameter t kombiniert, der den zeitlichen Verlauf der Bewegung des Medienobjektes während der Medienwiedergabe ermöglicht. Bei einem Digitalfilm können zum Beispiel die Ortskoordinaten des Medienobjektes zu jedem Einzelbild bestimmt und die Einzelbilder aufsteigend nummeriert werden. In diesem Anwendungsfall entspricht der Zeitparameter t der Nummer des Einzelbildes, auf die sich die Ortskoordinate bezieht. Durch diese Positionsinformation ist die Lage des Medienobjektes zu jedem Zeitpunkt während der Medienwiedergabe bekannt. Die Positionsinformationen zu den Medienobjekten werden separat und unabhängig vom digitalen Medium selbst gespeichert. Dabei greift die Wiedergabeeinheit während der Medienwiedergabe parallel auf zwei verschiedene Datenströme zu und zeigt beide in einer jeweiligen, separaten Schicht im Wiedergabebereich an. Der erste Datenstrom stellt den Inhalt des digitalen Mediums in der digitale Medien-Schicht bereit. Der zweite Datenstrom liefert die Informationen zu den im digitalen Medium identifizierten Medienobjekten in der Medienobjekt-Schicht. Bei der Anzeige auf dem Bildschirm wird die Medienobjekt-Schicht transparent über die Bildebene gelegt, welche der digitale Medien-Schicht entspricht. Durch die Medienobjekt-Schicht werden die Medienobjekte über die Wiedergabeeinheit zugreifbar. Die Medienobjekte werden dem Anwender in der Medienobjekt-Schicht über spezielle Anzeigeelemente visualisiert.

Während die Wiedergabeeinheit in einer möglichen Ausführungsform auf dem Computersystem des Anwenders installiert ist und dort ausgeführt wird, können das digitale Medium, die Positionsinformationen und semantischen Informationen zu den Medienobjekten und die Produktinformationen und semantischen Informationen zu den Produkten mit ihren jeweiligen Steuereinheiten, über die die Wiedergabeeinheit auf diese Daten zugreifen kann, jeweils auf unterschiedlichen Computersystemen vorgehalten werden. In einer erfindungsgemäßen Ausgestaltung kommunizieren die beteiligten Computersysteme über ein Netzwerk, zum Beispiel ein WAN (Wide Area Network), miteinander.

In einer weiteren möglichen Ausgestaltung der Erfindung ist das Netzwerk, über das die beteiligten Computersysteme miteinander kommunizieren, das Internet.

In einer wiederum weiteren möglichen Ausgestaltung der Erfindung ist das Netzwerk ein digitales Fernsehnetz.

Die Schnittstellen, über die die Wiedergabeeinheit mit den Steuereinheiten, die den Zugriff auf das digitale Medium bzw. die Informationen zu den Medienobjekten bzw. die Informationen zu den Produkten steuern, kommuniziert, können Webservices sein.

Eine mögliche Ausführungsform der Erfindung sieht die Programmierung der Wiedergabeeinheit auf Basis der Flash-Technologie vor.

Die Wiedergabeeinheit ist auch geeignet ein digitales Medium wiederzugeben, zu dem keine Medienobjekte und damit auch keine Produktinformationen gespeichert sind.

In einer möglichen Ausführungsform wird das Zuordnungsverfahren, das zu einem ausgewählten Medienobjekt passende Produkte auf Basis semantischer Informationen bestimmt, genau zu dem Zeitpunkt auf Basis der zu diesem Zeitpunkt aktuellen Daten ausgeführt, zu dem der Anwender die Produktinformationen anfordert. Auf diese Weise werden zeitaktuelle Produkte und keine veralteten Treffer angezeigt. In einer alternativen Ausführungsform kann die Zuordnung von Produkten zu Medienobjekten bereits zu einem früheren Zeitpunkt erfolgt sein.

In einer Fortentwicklung umfasst die Erfindung daneben ein Verfahren zur Zuordnung von Medienobjekten zu Produkten auf Grundlage der semantischen Informationen. Auf Basis dieses Verfahrens können zu einem neuen Produkt passende Medienobjekte gefunden werden. Somit kann verifiziert werden, dass zu einem neuen Produkt ein passendes Medienobjekt vorliegt. In einer möglichen Ausführungsform werden dem Verfahren Mittel zur semantische Suche in der beispielsweise semantischen Datenbank bereitgestellt.

Die Erfindung umfasst auch ein Verfahren zum Festlegen einer Ontologie. Die Ontologie definiert die semantisch annotierten Entitäten, deren Merkmale und deren semantische Relationen untereinander. Eine Ontologie dient dazu, Informationen auf der Ebene Bedeutung miteinander zu verknüpfen.

Die Ontologie kann zum Beispiel auf Basis der Web Ontology Language (OWL) definiert werden.

Die semantischen Informationen zu den Medienobjekten und die semantischen Informationen zu den Produkten werden erfindungsgemäß auf Basis der definierten Ontologie erfasst und in der jeweiligen Datenbank gespeichert. Die Datenbanken sind so organisiert, dass die semantischen Informationen zu den Medienobjekten gegen die semantischen Informationen zu den Produktangeboten abgleichbar sind. Eine erfindungsgemäße Ausgestaltung der Datenbanken stellt Mittel zur semantischen Ähnlichkeitssuche innerhalb der Datenbasis bereit. Auf Basis der verwendeten Ontologie und unter Nutzung der semantischen Ähnlichkeitssuche wird das Zuordnungsverfahren umgesetzt.

In einer Ausgestaltung der Erfindung ist die Wiedergabeeinheit einfach und kostenfrei erhältlich. So könnte sie beispielsweise über die Webseite des Medienanbieters, der das digitale Medium anbietet, bereitgestellt und heruntergeladen werden. Es ist auch denkbar, dass die Wiedergabeeinheit automatisiert mit dem Datenstrom der Medienobjekte auf dem Computersystem des Anwenders bereitgestellt wird. Daneben lässt sich die Wiedergabeeinheit über soziale Netzwerke, Blogs oder E-Mails weiter verbreiten.

In einer möglichen Ausführungsform der Erfindung werden dem Anwender die aktuell am Bildschirm sichtbaren Medienobjekte durch weitere, spezielle Markierungs-Mittel gekennzeichnet und auswählbar gemacht.

Vorteilhaft ist das Verfahren so ausgestaltet, dass der Anwender ausgewählte Medienobjekte des digitalen Mediums zu einer Favoritenliste hinzufügen kann. Dem Anwender wird die Möglichkeit geboten, zu jedem Zeitpunkt, auch bei Unterbrechung der Wiedergabe oder nach Beendigung der Wiedergabe, auf diese Favoritenliste zuzugreifen und bei Bedarf Produktinformationen zu den enthaltenen Medienobjekten anzufordern.

In einer weiteren Ausgestaltung des Verfahrens wird dem Anwender eine Komplettliste aller im digitalen Medium enthaltenen Medienobjekte angezeigt, aus der er bei Bedarf zu jedem Zeitpunkt, auch bei Unterbrechung der Wiedergabe oder nach Beendigung der Wiedergabe, ein Medienobjekt auswählen kann und Produktinformationen zu diesem ausgewählten Medienobjekt erhalten kann.

In einer wiederum weiteren Ausgestaltung ermöglicht das Verfahren dem Anwender sowohl ein einzelnes Medienobjekt als auch die Favoritenliste als auch die Komplettliste der Medienobjekte auf dem Computersystem des Anwenders zu speichern. Die Speicherung kann in verschiedenen Datenformaten, zum Beispiel in pdf, erfolgen.

In einer noch weiteren Ausgestaltung des Verfahrens werden dem Anwender Mittel bereitgestellt sowohl das digitale Medium selbst als auch ein ausgewähltes Medienobjekt sowie die Favoritenliste oder Komplettliste über das Netzwerk zu verbreiten. Für das digitale Medium selbst geschieht dies beispielsweise indem ein Link, mit dem auf das digitale Medium zugegriffen werden kann, über soziale Netzwerke, Blogs oder per E-Mail publiziert wird. Das ausgewählte Medienobjekt oder die Favoritenliste oder die Komplettliste können in verschiedenen Formaten verbreitet werden, zum Beispiel als pdf-Anhang zu einer E-Mail.

In einer weiteren möglichen Ausführungsform umfasst die Erfindung ein Verfahren, mit dem automatisiert relevante Medienobjekte, also zum Beispiel Medienobjekte, deren semantische Informationen mit vorhandenen Produkten übereinstimmen, in dem digitalen Medium gefunden werden. Die ermittelten Positionsinformationen zu den gefundenen Medienobjekten werden in einer Speichereinheit und die ermittelten semantischen Informationen in einer weiteren Speichereinheit gespeichert.

Damit das erfindungsgemäße Verfahren das digitale Medium wiedergeben kann, müssen die notwendigen Informationen zunächst in den vorgesehenen Speichereinheiten geeignet gespeichert und bereitgestellt werden.

Das digitale Medium wird in einer ersten Speichereinheit gespeichert. Die Speicherung erfolgt in einem Videoformat, das von der Wiedergabeeinheit unterstützt wird.

Die Informationen, das heißt insbesondere die Positionsinformationen, zu den Medienobjekten werden in einer zweiten Speichereinheit gespeichert, zum Beispiel einer relationalen Datenbank.

Die Produktinformationen werden in einer dritten Speichereinheit gespeichert, etwa einer relationalen Datenbank.

Die semantischen Informationen zu Medienobjekten und Produkten sowie die Ontologie, auf der die semantischen Informationen basieren, werden in einer vierten Speichereinheit gespeichert, etwa einer semantischen oder einer relationalen Datenbank.

Weitere Vorteile und Einzelheiten der Erfindung sollen anhand nachfolgender Figuren näher dargestellt werden. Es zeigen:
- Figur 1: einen Überblick über die beteiligten Computersysteme;
- Figur 2: eine System-Architektur mit den beteiligten Komponenten;
- Figur 3: ein Aktivitätsdiagramm, das das Verfahren zum Zugriff auf digitale Medien beschreibt;
- Figur 4: eine Sicht auf die grafische Benutzungsoberfläche der Wiedergabeeinheit 31;
- Figur 5: eine weitere Sicht auf die grafische Benutzungsoberfläche der Wiedergabeeinheit 31 ;
- Figur 6: eine dritte Sicht auf die grafische Benutzungsoberfläche der Wiedergabeeinheit 31 ;

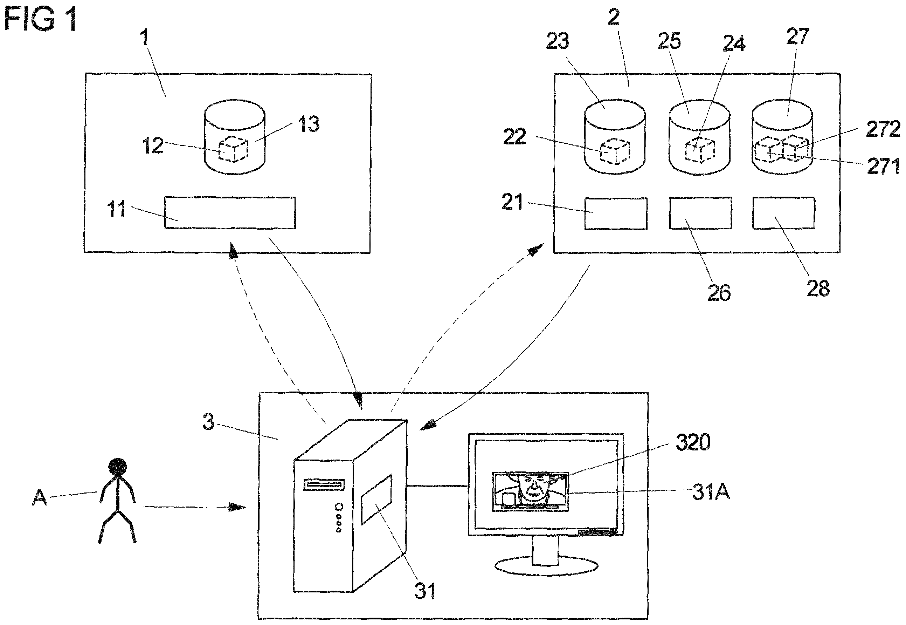

Die Figur 1 gibt einen Überblick einer Ausführungsform der an der Vorrichtung zum Zugriff auf digitale Medien beteiligten Computersysteme.

In einer möglichen Ausgestaltung der Erfindung sind das erste, zweite und dritte Computersystem 1, 2 und 3 über ein Netzwerk, beispielsweise das Internet, miteinander verbunden. Das erste Computersystem 1, das zum Beispiel von einem Medienanbieter betrieben wird, stellt in einer ersten Speichereinheit 13 ein digitales Medium 12 bereit. In dem digitalen Medium 12 sind Medienobjekte enthalten, die bei der Wiedergabe des digitalen Mediums dargestellt werden. Auf das digitale Medium 12 kann mittels einer ersten Steuereinheit 11 zugegriffen werden. Mit dem dritten Computersystem 3 kann ein Anwender A auf das digitale Medium 12, das sich auf dem ersten Computersystem 1 befindet, mittels der ersten Steuereinheit 11 zugreifen und die Wiedergabe anstossen. Das digitale Medium 12 wird mittels der Wiedergabeeinheit 31, die sich auf dem dritten Computersystem 3 befindet, wiedergegeben. Unter anderem verfügt die Wiedergabeeinheit 31 über Mittel zum Starten, zum Stoppen, zum Pausieren und zur Lautstärkeregelung der Medienwiedergabe.

Auf dem zweiten Computersystem 2 ist eine zweite Speichereinheit 23, zum Beispiel eine relationale Datenbank, angeordnet, in der Informationen 22 über im digitalen Medium 12 enthaltene Medienobjekte gespeichert sind. Des Weiteren ist auf dem zweiten Computersystem 2 eine dritte Speichereinheit 25, zum Beispiel eine weitere relationale Datenbank, angeordnet, in der Informationen 24 zu Produkten gespeichert sind. In einer alternativen Ausgestaltung können die Speichereinheiten 23 und 25 auch in einer gemeinsamen relationalen Datenbank angeordnet sein. Auf die zweite Speichereinheit 23 kann mittels einer zweiten Steuereinheit 21 zugegriffen werden. Auf die dritte Speichereinheit 25 kann mittels einer dritten Steuereinheit 26 zugegriffen werden. Darüber hinaus ist auf dem zweiten Computersystem 2 eine vierte Speichereinheit 27 angeordnet. Bei der vierten Speichereinheit 27 handelt es sich um eine semantische oder eine relationale Datenbank, in der semantische Informationen 271 zu Medienobjekten sowie semantische Informationen 272 zu Produkten gespeichert sind. In einer weiteren Ausgestaltung können die Speichereinheiten 23, 25 und 27 auch in einer gemeinsamen relationalen Datenbank angeordnet sein. Auf die vierte Speichereinheit 27 kann mittels einer vierten Steuereinheit 28 zugegriffen werden.

Die Wiedergabeeinheit 31 verfügt über Mittel, via des Netzwerks und über die zweite Steuereinheit 21 auf die Informationen 22 zum Medienobjekt und über die dritte Steuereinheit 26 auf die Informationen 24 zum Produkt zuzugreifen. Die zum Medienobjekt gespeicherten Informationen 22 umfassen die Positionsinformationen, welche die zeitabhängige Position des Medienobjektes während der Medienwiedergabe beinhalten. Die in der dritten Speichereinheit 25 zum Produkt gespeicherten Informationen 24 umfassen die Inhalts-Informationen, die dem Anwender A zum Produkt bereitgestellt werden sollen. Dazu zählen zum Beispiel erklärende Texte zum Produkt, Bilder zum Produkt und Links zu produktrelevanten Internetseiten. Die in der vierten Speichereinheit 27 zum Produkt gespeicherten Informationen sind semantische Informationen 272, die das Produkt charakterisieren. Die in der vierten Speichereinheit 27 zum Medienobjekt gespeicherten Informationen sind semantische Informationen 271, die das Medienobjekt charakterisieren.

Während der Wiedergabe des digitalen Mediums 12 durch die Wiedergabeeinheit 31 kann der Anwender A im Wiedergabebereich 320 der grafischen Benutzungsoberfläche 31A der Wiedergabeeinheit 31 mittels einer Eingabeeinrichtung ein an Hand seiner Positionsinformationen 22 dargestelltes Medienobjekt selektieren und dazu Produktinformationen 24 einholen. Bei dem Produkt kann es sich um ein Informationsprodukt handeln, das Detailinformationen zu dem selektierten Medienobjekt bereithält. Bei dem Produkt 24 kann es sich aber auch um ein zum Kauf angebotenes Produkt handeln.

Ist beim Zugriff des dritten Computersystems 3 auf das digitale Medium 12, welches auf dem ersten Computersystem 1 vorgehalten wird, die Wiedergabeeinheit 31 noch nicht auf dem dritten Computersystem 3 vorhanden, so stellt die erste Steuereinheit 11 in einer möglichen Ausführungsform der Erfindung Mittel zur Verfügung, die dem dritten Computersystem 3 neben dem digitalen Medium 12 Ressourcen zur Installation der Wiedergabeeinheit 31 bereitstellen. In einer alternativen Ausführungsform der Erfindung können die Ressourcen zur Installation der Wiedergabeeinheit 31 auch von dem zweiten Computersystem 2 zur Verfügung gestellt werden. Die Wiedergabeeinheit 31 kann beispielsweise in Form eines Zusatzprogrammes bereitgestellt werden, welches in den Browser integriert wird, über den auf das erste Computersystem 1 zugegriffen wird. Bei den Ressourcen kann es sich aber auch um Installationsroutinen handeln, die eine separate Wiedergabeeinheit 31 auf dem dritten Computersystem 3 installieren.

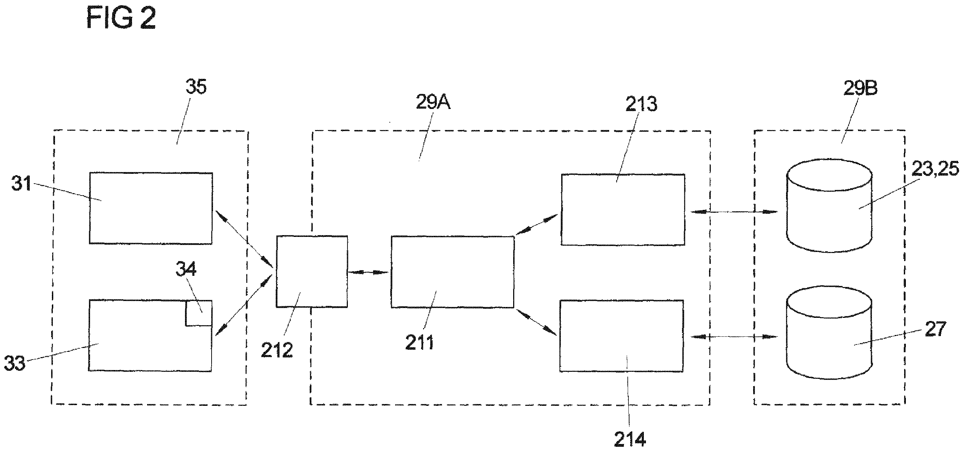

Figur 2 beschreibt Architektur und Komponenten der Vorrichtung zum Zugriff auf digitale Medien zu den zweiten und dritten Computersystemen 2 und 3 bezüglich der zur Figur 1 beschriebenen Ausführungsformen. Das erste Computersystem 1 ist in Figur 2 nicht enthalten, da die Bereitstellung eines digitalen Mediums 12 und der Zugriff auf das digitale Medium 12 über ein Netzwerk bekannt und nicht Teil der Erfindung sind.

Die in Figur 2 beschriebene Systemarchitektur besteht aus drei Schichten. Das sind die Präsentations-Schicht 35, die Steuerungs-Schicht 29A und die Persistenz-Schicht 29B. Die Präsentations-Schicht 35 umfasst die grafische Benutzungsoberfläche der Vorrichtung zum Zugriff auf digitale Medien, über die ein Anwender A auf die Vorrichtung zugreift. Ein Anwender A kann beispielsweise über einen Browser 33, in den die Wiedergabeeinheit 31 in Form eines Zusatzprogrammes 34 integriert ist, auf die Vorrichtung zugreifen. Die Wiedergabeeinheit 31 kann aber auch als selbständiges Computerprogramm auf dem dritten Computersystem 3 installiert sein. In diesem Fall greift der Anwender A über die separate Wiedergabeeinheit 31 auf die Vorrichtung zu. Die in der Wiedergabeeinheit 31 auf Anforderung des Anwenders A dargestellten Informationen werden durch die Steuerungsschicht 29A kontrolliert. Die zentrale Kontrollinstanz der Steuerungsschicht 29A stellt der Applikations-Server 211 dar. Der Applikations-Server 211 erhält seine Eingangsinformationen vom Webservice 212. Der Webservice 212 stellt die Schnittstelle dar, über die die Steuerungs-Schicht 29A über das Netzwerk, zum Beispiel das Internet, adressiert werden kann. Die Wiedergabeeinheit, entweder gegeben durch das selbständige Computerprogramm 31 oder gegeben durch das Browser-Zusatzprogramm 34, kommuniziert über den Webservice 212 mit der Steuerungsschicht 29A. Des Weiteren enthält die Steuerungs-Schicht 29A verschiedene Anwendungs-Komponenten, wie z. B. die CMS-Komponente 213 und die sematische Komponente 214. Die Anwendungs-Komponenten 213 und 214 werden in dem Applikations-Server 211 ausgeführt. Die CMS-Komponente verwaltet die Inhalte, die in den Speichereinheiten 23, 25 innerhalb der Persistenzschicht 29 gehalten werden. Dazu gehören zum Beispiel die Positionsinformationen 22 zu einem Medienobjekt und die Informationen 24, die zu einem Produkt vorgehalten werden. Die semantische Komponente 214 verwaltet die Informationen, die in der vierten Speichereinheit 27 gespeichert sind. In der vierten Speichereinheit 27 befinden sich zum Beispiel die semantischen Informationen 271 zum Medienobjekt und die semantischen Informationen 272 zum Produkt. Die semantischen Informationen 271, 272 sind in der vierten Speichereinheit 27 auf Basis der gewählten Ontologie gespeichert.

In einer weiteren möglichen Ausprägung der in Figur 2 beschriebenen Architektur kann es sich bei dem selbstständigen Computerprogramm 31 in der Präsentationsschicht 35 auch um eine Editierungseinheit handeln, die zum Beispiel direkt auf dem zweiten Computersystem 2 oder auf einem weiteren Computersystem angeordnet ist. Die Editierungseinheit dient dem Auffinden und Markieren von Medienobjekten in einem digitalen Medium 12 und damit der Bestimmung von Informationen 22 in Form von Positionsinformationen zum Medienobjekt sowie der Bestimmung der semantischen Informationen 271 zum Medienobjekt. Die manuell bedienbare Editierungseinheit unterstützt dabei Mittel, die erfindungsgemäß vorgesehen sind, Medienobjekte mit ihren Informationen 22, also z. B. den Positionsinformationen, sowie den semantischen Informationen 271, automatisiert in dem digitalen Medium 12 zu bestimmen.

In einer wiederum weiteren Ausprägung der in Figur 2 beschriebenen Architektur kann es sich bei dem selbständigen Computerprogramm 31 auch um eine Inhaltsverwaltungseinheit handeln, mit der z. B. die Informationen 24 zu Produkten erfasst werden, die dem Anwender A angezeigt werden sollen.

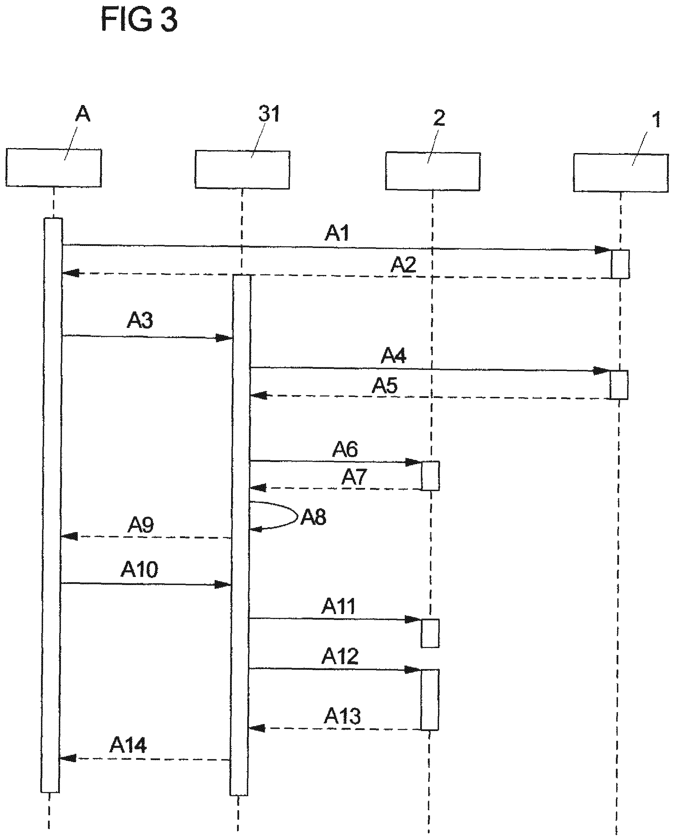

Figur 3 beschreibt ein Verfahren zum Zugriff auf digitale Medien anhand eines Sequenzdiagramms:
(A1): Ein Anwender A greift mittels des dritten Computersystems 3 über das Internet auf die Webseite des Medienanbieters zu, die sich auf dem ersten Computersystem 1 befindet.
(A2): Die Webseite wird heruntergeladen und dem Anwender A auf dem Bildschirm seines Computersystems 3 angezeigt. Auf der Webseite werden dem Anwender A digitale Filme zum Abspielen angeboten.
(A3): Der Anwender A selektiert einen Film 12, den er abspielen möchte.
(A4): Die auf dem dritten Computersystem 3 des Anwenders A befindliche Wiedergabeeinheit 31 wird gestartet und lädt den selektierten Film 12 von der Webseite des Medienanbieters.
(A5): Der Film 12 wird per Datenstrom an die Wiedergabeeinheit 31 übertragen.
(A6): Neben dem Film 12 lädt die Wiedergabeeinheit 31 die Informationen 22, insbesondere zeitabhängigen Positionsinformationen, zu den in dem Medium enthaltenen Medienobjekten, die in einer Medienobjekt-Schicht angeordnet sind, von dem zweiten Computersystem 2.
(A7): Die Medienobjekt-Schicht mit den Informationen 22 zu den Medienobjekten wird per Datenstrom an die Wiedergabeeinheit 31 übertragen.
(A8): Der Film 12 und die Medienobjekt-Schicht werden in dem Wiedergabebereich 320, der innerhalb der grafischen Benutzungsoberfläche 31A der Wiedergabeeinheit 31 angeordnet ist, auf dem Bildschirm des dritten Computersystems 3 angezeigt und abgespielt. Dabei wird die Medienobjekt-Schicht transparent über die Bildebene des Filmes 12 gelegt. Die Medienobjekte werden dem Anwender A in der Medienobjekt-Schicht mittels einer Eingabeeinrichtung zugreifbar gemacht.
(A9): Durch die Bildschirmanzeige wird der Film 12 mit der Medienobjekt-Schicht dem Anwender A zugänglich gemacht.
(A10): Der Anwender A wählt mittels der Eingabeeinrichtung ein durch seine Positionsinformationen 22 bestimmtes Medienobjekt aus, zu dem er weitere Informationen erhalten möchte.
(A11): Die Wiedergabeeinheit 31 erfasst die Auswahl des Medienobjektes. Die Wiedergabeeinheit 31 sendet diese Information zur Verwaltung der Nutzungserfassung an das zweite Computersystem 2. Die Nutzungserfassung kann als Grundlage zur Abrechnung der Werbedienstleistung dienen, die durch die nutzerausgelöste Präsentation von Produktinformationen während der Medienwiedergabe erbracht wird.
(A12): Die Wiedergabeeinheit 31 fordert die Produktinformationen zu dem selektierten Medienobjekt von dem zweiten Computersystem 2 an. Die zu einem Medienobjekt geeigneten Produkte werden anhand der vorliegenden semantischen Informationen zu dem Medienobjekt ermittelt. Die Ermittlung geeigneter Produkte basiert auf einem Zuordnungsverfahren, welches Produkte bestimmt, die über dieselben oder zumindest über ähnliche semantische Merkmale verfügen wie das Medienobjekt.
   Zum Auffinden dieser Produkte wird beispielsweise zum Zeitpunkt der Produktanforderung durch den Anwender A eine semantische Ähnlichkeitssuche durchgeführt, deren Parameter durch die semantischen Merkmale des Medienobjektes und durch das Zuordungsverfahren bestimmt sind. In einer weiteren Ausführungsform kann der Anwender A das Zuordnungsverfahren auf einzelne Merkmale, wie beispielsweise Farbe oder Preis, einschränken beziehungsweise die Relevanz einzelner Merkmale bestimmen. Durch geeignete Indexierung der vierten Speichereinheit 27 wird die semantische Ähnlichkeitssuche beschleunigt. Um die Antwortzeiten zu verkürzen, kann die Zuordnung von geeigneten Produkten zu einem selektierten Medienobjekt auch bereits zu einem früheren Zeitpunkt vorgenommen werden.
(A13): Die Produktinformationen 24 werden an die Wiedergabeeinheit 31 übermittelt.
(A14): Die Produktinformationen werden dem Anwender innerhalb der grafischen Benutzungsoberfläche 31A der Wiedergabeeinheit 31 auf dem Bildschirm angezeigt.

In einer weiteren Ausführungsform werden die semantischen Informationen zu Medienobjekten und Produkten beispielsweise durch die Semantic Web Beschreibungssprache auf Basis einer Ontologie beschrieben, wobei die Ontologie beispielsweise auf Basis der Web Ontology Language definiert wird. Dadurch ist es möglich, die durch Ontologien bereitgestellten Konzepte und Beziehungen in die semantische Ähnlichkeitssuche, die im Schritt (A12) der Figur 3 beschrieben wird, mit einzubeziehen. Dabei wird jedes Medienobjekt und jedes Produkt in einer logischen Beschreibung über Merkmale und Zusicherungen semantisch charakterisiert. Eine semantische Ähnlichkeitssuche basiert auf der Ermittlung der semantischen Distanz von einem ausgewählten Medienobjekt zu einem Produkt, wobei sich die semantische Distanz auf Basis der Merkmals- und Zusicherungs-Ausprägungen des Medienobjektes und des jeweiligen Produktes auf Basis der Ontologie berechnen läßt. Ein Produkt stellt beispielsweise einen Treffer in einer Ähnlichkeitssuche dar, wenn die semantische Distanz zwischen dem Produkt und dem ausgewählten Medienobjekt unter einem gegebenen Schwellwert liegt. Das Zuordnungsverfahren definiert, welche Merkmale und welche Zusicherungen in welcher Gewichtung bei der semantischen Ähnlichkeitssuche Berücksichtigung finden. In einer möglichen Ausgestaltung kann der Anwender A selbst die Gewichtung beziehungsweise Relevanz der unterschiedlichen Merkmale, wie zum Beispiel Preis oder Marke des Produktes, beeinflussen und dadurch die Ähnlichkeitssuche seinen individuellen Bedürfnissen anpassen.

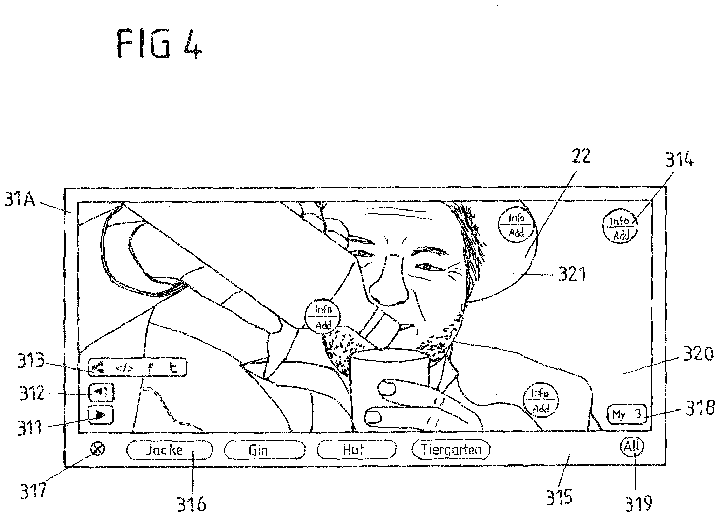

Figur 4 zeigt eine mögliche Ausführungsform der grafischen Benutzungsoberfläche 31A zur Wiedergabeeinheit 31. Die Wiedergabeeinheit 31 ermöglicht den Zugriff auf digitale Medien 12 in zumindest einem Videoformat. Vorzugsweise unterstützt die Wiedergabeeinheit 31 den Zugriff auf digitale Medien in einer Vielzahl von Videoformaten. Die grafische Benutzungsoberfläche 31A der Wiedergabeeinheit 31 beinhaltet einen Wiedergabebereich 320, in dem das digitale Medium 12 wiedergegeben wird. Die grafische Benutzungsoberfläche 31A der Wiedergabeeinheit 31 beinhaltet weitere Bereiche, über die die Wiedergabeeinheit 31 gesteuert werden kann bzw. Zusatzinformationen angezeigt werden können. Die Größe der grafischen Benutzungsoberfläche 31A der Wiedergabeeinheit 31 lässt sich durch den Anwender A anpassen. Die grafische Benutzungsoberfläche 31A der Wiedergabeeinheit 31 verfügt über ein Kontrollelement 311, mit dem die Wiedergabe des digitalen Mediums gestartet bzw. gestoppt werden kann, ein Kontrollelement 312, mit dem die Lautstärke der Medienwiedergabe kontrolliert werden kann und ein Kontrollelement 313, mit dem sich das digitale Medium 12 sowie die Wiedergabeeinheit 31 verbreiten lassen. Die Verbreitung erfolgt zum Beispiel durch Publikation eines Links, mit dem auf das digitale Medium zugegriffen werden kann, über soziale Netzwerke, Blogs oder per E-Mail.

Neben diesen Funktionen, verfügt die Wiedergabeeinheit 31 über weitere spezifische Funktionen. Die in Figur 4 gezeigte Ausführungsform beinhaltet beispielsweise eine Markerleiste 315, die alle Medienobjekte an Hand ihrer jeweiligen Positionsinformationen 22 auflistet, die zum aktuellen Zeitpunkt im Wiedergabebereich des digitalen Mediums 12 angezeigt werden. Jedem angezeigten Medienobjekt ist ein Marker 316 in der Markerleiste 315 als Eingabeeinrichtung zugeordnet. Die Anordnung der Marker 316 in der Markerleiste 315 geschieht auf Basis eines Anordnungsalgorithmus, der die Anordnung der Medienobjekte im Wiedergabebereich 320 wiedergibt. Über den An-/Ausschalter 317 lässt sich die Markerleiste 315 ein- und ausblenden. Durch die Auswahl eines Markers 316 kann ein Anwender A auf das zugeordnete Medienobjekt und über dieses auf die zugeordneten Produktinformationen 24 zugreifen.

Neben dem Zugriff über die Markerleiste 315 kann auch direkt über den Wiedergabebereich 320 auf die durch ihre Positionsinformationen 22 bestimmten Medienobjekte zugegriffen werden. Durch Aktivierung des Medienwiedergabebereichs 320 werden alle aktuell vorhandenen interaktiven Elemente 314 sichtbar gemacht. Ein interaktives Element 314 markiert ein Medienobjekt und stellt somit eine weitere Eingabeeinrichtung dar. Über den Info-Bereich des interaktiven Elementes 314 kann ebenfalls auf Produktinformationen zum Medienobjekt zugegriffen werden. Der Add-Bereich des interaktiven Elementes 314 erlaubt dem Anwender A, das zugehörige Medienobjekt in seiner Favoritenliste zu speichern. Auf die Favoritenliste kann mittels eines Kontrollelementes 318 zugegriffen werden. In der Favoritenliste sind alle die Medienobjekte gespeichert, die der Anwender A bisher als Favoriten markiert hat. Über ein weiteres Kontrollelement 319 kann auf eine Komplettliste aller zum digitalen Medium 12 gespeicherten Medienobjekte zugegriffen werden. Über die Liste aller Medienobjekte und die Auswahl eines hierin enthaltenen Medienobjektes kann der Anwender A wiederum auf die Produkt-Informationsangebote 24 zum Medienobjekt zurückgreifen.

In einer weiteren Ausführungsform bietet das Verfahren dem Anwender A zusätzlich die Möglichkeit ein einzelnes Medienobjekt, die Favoritenliste und/oder die Komplettliste auf seinem lokalen Computersystem zu speichern sowie über das Netzwerk zu verbreiten. Die Speicherung kann in verschiedenen Dateiformaten erfolgen, beispielsweise im pdf-Format. Die Verbreitung kann zum Beispiel als Anhang einer E-Mail erfolgen.

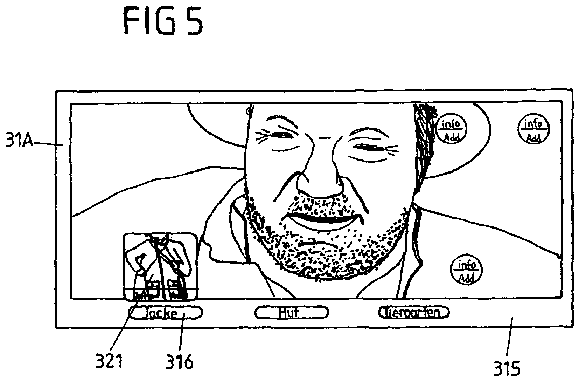

Figur 5 zeigt eine weitere Sicht auf die grafische Benutzungsoberfläche 31A der Wiedergabeeinheit 31. Bei Selektierung eines Markers 316 aus der Markerleiste 315 wird ein kleines Informationsfenster 321 angezeigt, welches eine Detailbildansicht des Medienobjektes bereitstellt. Das kleine Informationsfenster 321 verfügt, wie das interaktive Element 314, über einen Info-Bereich und einen Add-Bereich, die über dieselbe Funktionalität wie die gleichlautenden Bereiche im interaktiven Element 314 verfügen. Das kleine Informationsfensters 321 kann während der Medien-Wiedergabe, bei Unterbrechung der Wiedergabe oder nach dem Ende der Wiedergabe angezeigt werden. Wird die Anzeige des kleinen Informationsfensters 321 während der Medienwiedergabe angefordert, so unterbricht die Anzeige des kleinen Informationsfensters die Wiedergabe des digitalen Mediums 12 im Medienwiedergabebereich 320 nicht.

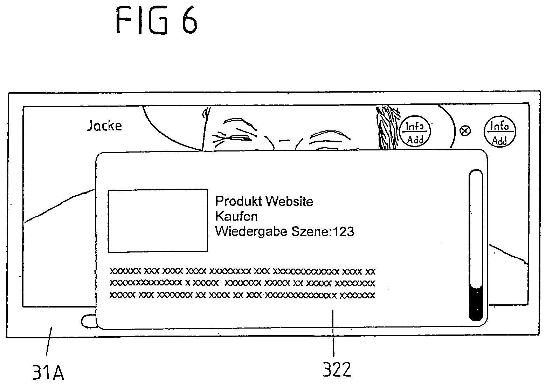

Figur 6 zeigt eine weitere Sicht auf die grafische Benutzungsoberfläche 31A der Wiedergabeeinheit 31 in einer möglichen Ausführungsform. Diese Sicht zeigt eine mögliche Anordnung des großen Informationsfensters 322, welches nach Selektierung des Add-Bereiches im interaktiven Element 314 oder im kleinen Informationsfenster 321 angezeigt wird. Das große Informationsfenster 322 enthält Produktinformationen 24 zum ausgewählten Medienobjekt. Zu diesen Informationen kann zum Beispiel beschreibender Text, Fotos zum Produkt oder zu Produktvarianten sowie Links zur Webseite des Produktherstellers oder zu einer anderen Webseite, beispielweise einer Webseite, über die das Produkt bezogen werden kann oder zu einer Webseite, die dem Konsumentenaustausch über das Produkt dient, gehören.

Produkte können auch Informationsprodukte zum Medienobjekt sein. Handelt es sich bei dem Medienobjekt zum Beispiel um eine Sehenswürdigkeit, so können die zugeordneten Inhalts-Informationen 24 zum Beispiel einen Kartenausschnitt mit der Sehenswürdigkeit enthalten.

Während der Anzeige des großen Informationsfensters 322 wird die Wiedergabe des digitalen Mediums 12 gestoppt. Die Wiedergabe startet erneut von der gestoppten Stelle, sobald das große Informationsfenster 322 wieder geschlossen wird.

## Patentansprüche

1. Wiedergabeeinheit (31), über die der Inhalt eines digitalen Mediums (12) in einem Wiedergabebereich (320) wiedergegeben werden kann und die dazu eingerichtet ist, über eine erste Steuereinheit (11) auf das wiederzugebende digitale Medium (12) zuzugreifen, wobei das digitale Medium (12) in einer ersten Speichereinheit (13) gespeichert ist,
und die Wiedergabeeinheit (31) ausgebildet und vorgesehen ist
- über eine zweite Steuereinheit (21) auf Informationen (22) zu mindestens einem Medienobjekt, das bei der Wiedergabe des digitalen Mediums (12) dargestellt wird, zuzugreifen, wobei die Informationen (22) in einer zweiten Speichereinheit (23) gespeichert sind und die zeitabhängige Position des Medienobjektes bei der Medienwiedergabe umfassen,
und
- über eine dritte Steuereinheit (26) auf Informationen (24) zu mindestens einem Produkt zuzugreifen, wobei die Informationen (24) in einer dritten Speichereinheit (25) gespeichert sind
und
- bei der Wiedergabe des digitalen Mediums (12) ein anhand seiner Positionsinformationen (22) dargestelltes Medienobjekt mittels einer Eingabeeinrichtung (314, 316) zu selektieren und Produktinformationen (24) zum selektierten Medienobjekt anzufordern,
**dadurch gekennzeichnet, dass**
- zu dem mindestens einen Medienobjekt semantische Informationen (271) und zu dem mindestens einen Produkt semantische Informationen (272) verfügbar sind, die in einer vierten Speichereinheit (27) gespeichert sind und auf die über eine vierte Steuereinheit (28) zugegriffen werden kann,
- so dass genau diejenigen Produkte (24) angeboten werden, deren semantische Informationen (272) mit den semantischen Informationen (271) des ausgewählten Medienobjektes hinsichtlich eines Zuordnungsverfahrens übereinstimmen.

2. Vorrichtung nach Anspruch 1, wobei die Medienobjekte durch ihre Positionsinformationen (22) auf einer transparenten Ebene (321), die über dem Medienwiedergabebereich (320) angeordnet ist, visualisiert werden und über die Eingabeeinrichtung (314, 316) für einen Anwender (A) zugreifbar sind.

3. Vorrichtung nach Anspruch 1 oder 2, wobei die vierte Speichereinheit (27) Mittel zur semantischen Ähnlichkeitssuche bereitstellt.

4. Vorrichtung nach einem der vorherigen Ansprüche, wobei die Wiedergabeeinheit (31) auf einem dritten Computersystem (3) und die erste bis vierte Steuereinheit (11, 21, 26, 28) mit ihrer jeweiligen Speichereinheit (13, 23, 25, 27) auf mind. einem anderen Computersystem (1, 2) angeordnet sind und alle diese Computersysteme (1, 2, 3) über ein Netzwerk miteinander verbunden sind.

5. Vorrichtung nach Anspruch 1, die zusätzlich zur Wiedergabe von digitalen Medien geeignet ist, bei denen die Anzahl der Medienobjekte in dem digitalen Medium (12) und die Anzahl der Produkte 0 sein kann.

6. Vorrichtung zum Zugriff auf digitale Medien mit
- einer Wiedergabeeinheit (31), über die der Inhalt eines digitalen Mediums (12) in einem Wiedergabebereich (320) wiedergegeben werden kann und die dazu eingerichtet ist über eine erste Steuereinheit (11) auf das wiederzugebende digitale Medium (12) zuzugreifen, wobei das digitale Medium (12) in einer ersten Speichereinheit (13) gespeichert ist,
und
- einer zweiten Steuereinheit (21) sowie einer zweiten Speichereinheit (23), wobei in der zweiten Speichereinheit (23) Informationen (22) zu mindestens einem Medienobjekt, das bei der Wiedergabe des digitalen Mediums (12) dargestellt wird, gespeichert sind, wobei die Informationen (22) zeitabhängige Positionsinformationen zum Medienobjekt bei der Medienwiedergabe umfassen und auf die zweite Speichereinheit (23) mittels der zweiten Steuereinheit (21) zugegriffen wird
und
- einer dritten Steuereinheit (26) sowie einer dritten Speichereinheit (25), wobei in der dritten Speichereinheit (25) Informationen (24) zu mindestens einem Produkt gespeichert sind und auf die dritte Speichereinheit (25) über die dritte Steuereinheit (26) zugegriffen wird,
wobei die Wiedergabeeinheit (31) ausgebildet und vorgesehen ist
- auf in der zweiten Speichereinheit (23) gespeicherte Informationen zu mindestens einem Medienobjekt über die zweite Steuereinheit (21) zuzugreifen
und
- auf in der dritten Speichereinheit (25) gespeicherte Informationen zu mindestens einem Produkt über die dritte Steuereinheit (26) zuzugreifen
und
- bei der Wiedergabe des digitalen Mediums (12) ein anhand seiner Positionsinformationen (22) dargestelltes Medienobjekt mittels einer Eingabeeinrichtung (314, 316) zu selektieren und Produktinformationen (24) zum selektierten Medienobjekt anzufordern,
**dadurch gekennzeichnet, dass**
- die Vorrichtung eine vierte Steuereinheit (28) sowie eine vierte Speichereinheit (27) umfasst, wobei zu dem mindestens einen Medienobjekt semantische Informationen (271) und zu dem mindestens einen Produkt semantische Informationen (272) verfügbar sind, die in der vierten Speichereinheit (27) gespeichert sind und auf die über die vierte Steuereinheit (28) zugegriffen werden kann,
- so dass genau diejenigen Produkte (24) angeboten werden, deren semantische Informationen (272) mit den semantischen Informationen (271) des ausgewählten Medienobjektes hinsichtlich eines Zuordnungsverfahrens übereinstimmen.

7. Vorrichtung nach Anspruch 6 mit den Merkmalen mindestens einer der Ansprüche 2 bis 5.

8. Verfahren zum Zugriff auf digitale Medien, bei dem eine Wiedergabeeinheit (31), über die der Inhalt eines digitalen Mediums (12) in einem Wiedergabebereich (320) wiedergegeben werden kann, über eine erste Steuereinheit (11) auf das wiederzugebende digitale Medium (12) zugreift, wobei das digitale Medium (12) in einer ersten Speichereinheit (13) gespeichert ist,
und die Wiedergabeeinheit (31)
- über eine zweite Steuereinheit (21) auf Informationen (22) zu mindestens einem Medienobjekt zugreift, das bei der Wiedergabe des digitalen Mediums (12) dargestellt wird, wobei die Informationen (22) in einer zweiten Speichereinheit (23) gespeichert sind und die zeitabhängige Position des Medienobjektes bei der Medienwiedergabe umfassen,
- und über eine dritte Steuereinheit (26) auf Informationen (24) zu mindestens einem Produkt zugreift, wobei die Informationen (24) in einer dritten Speichereinheit (25) gespeichert sind
und dass durch Betätigung einer Eingabeeinrichtung (314, 316) bei der Wiedergabe des digitalen Mediums (12) ein dargestelltes Medienobjekt selektiert wird, um Produktinformationen (24) zum selektierten Medienobjekt anzufordern,
**dadurch gekennzeichnet, dass**
- zu dem mindestens einen Medienobjekt semantische Informationen (271) und zu dem mindestens einen Produkt semantische Informationen (272) bereitgestellt werden, die in einer vierten Speichereinheit (27) gespeichert sind und auf die über eine vierte Steuereinheit (28) zugegriffen werden kann,
- wobei einem Anwender (A) bei Anforderung von Produkten zu einem selektierten Medienobjekt genau die Produkte mit ihren Produktinformationen (24) angeboten werden, für die die zum Produkt gespeicherten semantischen Informationen (272) und die zum Medienobjekt gespeicherten semantischen Informationen (271) hinsichtlich eines Zuordnungsverfahrens übereinstimmen.

9. Verfahren nach Anspruch 8, wobei das Zuordnungsverfahren Produkte bestimmt, die über dieselben oder zumindest über ähnliche semantische Merkmale verfügen wie das Medienobjekt.

10. Verfahren nach einem der Ansprüche 8-9, wobei zum Zeitpunkt der Produktanforderung durch den Anwender (A) eine semantische Ähnlichkeitssuche durchgeführt wird, deren Parameter durch die semantischen Merkmale des Medienobjektes und durch das Zuordnungsverfahren bestimmt sind.

11. Verfahren nach einem der Ansprüche 8-10, wobei eine Ontologie definiert wird und die semantischen Informationen (271, 272) auf Basis dieser Ontologie erfasst werden und die Ontologie zur Festlegung des Zuordnungsverfahrens verwendet wird.

12. Verfahren nach Anspruch 10 in Verbindung mit Anspruch 11, wobei die semantische Ähnlichkeitssuche auf der Ermittlung der semantischen Distanz von einem ausgewählten Medienobjekt zu einem Produkt basiert, wobei sich die semantische Distanz auf Basis der Merkmals- und Zusicherungs-Ausprägungen des Medienobjektes und des jeweiligen Produktes auf Basis der Ontologie berechnen läßt, und wobei die semantische Distanz unter einem gegebenen Schwellwert liegt.

13. Verfahren nach einem der Ansprüche 8-12, wobei ein Anwender (A) selektierte Medienobjekte zu einer Favoritenliste hinzufügen kann und eine Komplettliste aller im digitalen Medium (12) enthaltenen Medienobjekte verfügbar ist und einem Anwender (A) ein Mittel bereitgestellt wird, mit dem er zu jedem Zeitpunkt während der Wiedergabe sowie bei Unterbrechung oder nach Beendigung der Wiedergabe des digitalen Mediums (12) auf die Favoritenliste und die Komplettliste zugreifen kann, und der Anwender (A) über die Favoritenliste und über die Komplettliste auf die Medienobjekte und die jedem Medienobjekt zugeordneten Produktinformationen (24) zugreifen kann.

14. Verfahren nach einem der Ansprüche 8-13, wobei einem Anwender (A) Mittel zur Verbreitung des digitalen Mediums (12), der Wiedergabeeinheit (31), eines Medienobjektes, einer Favoritenliste und einer Komplettliste bereitgestellt werden.

15. Verfahren nach einem der Ansprüche 8-14, bei dem Medienobjekte mit ihren Positionsinformationen (22) und semantischen Informationen (271) in einem digitalen Medium (12) automatisch erkannt werden und die Positionsinformationen (22) in der zweiten Speichereinheit (23) und die semantischen Informationen (271) in der vierten Speichereinheit (27) gespeichert werden.

## Claims

1. Playback unit (31) which can be used to play back the contents of a digital medium (12) in a playback area (320) and is set up to access the digital medium (12) to be played back via a first control unit (11), wherein the digital medium (12) is stored in a first storage unit (13),
and the playback unit (31) is designed and provided
- for the purpose of accessing information (22) relating to at least one media object, which is presented when playing back the digital medium (12), via a second control unit (21), wherein the information (22) is stored in a second storage unit (23) and comprises the time-dependent position of the media object during media playback,
and
- for the purpose of accessing information (24) relating to at least one product via a third control unit (26), wherein the information (24) is stored in a third storage unit (25),
and
- for the purpose of selecting a media object presented on the basis of its position information (22) when playing back the digital medium (12) by means of an input device (314, 316) and requesting product information (24) relating to the selected media object,
**characterized in that**
- semantic information (271) relating to the at least one media object and semantic information (272) relating to the at least one product is available, which information is stored in a fourth storage unit (27) and can be accessed via a fourth control unit (28),
- with the result that precisely those products (24) whose semantic information (272) corresponds to the semantic information (271) relating to the selected media object with respect to an assignment method are offered.

2. Apparatus according to Claim 1, wherein the media objects are visualized, by means of their position information (22), on a transparent plane (321) arranged above the media playback area (320) and can be accessed by a user (A) via the input device (314, 316).

3. Apparatus according to Claim 1 or 2, wherein the fourth storage unit (27) provides means for a semantic similarity search.

4. Apparatus according to one of the preceding claims, wherein the playback unit (31) is arranged on a third computer system (3) and the first to fourth control units (11, 21, 26, 28), with their respective storage unit (13, 23, 25, 27), are arranged on at least one other computer system (1, 2), and all of these computer systems (1, 2, 3) are connected to one another via a network.

5. Apparatus according to Claim 1, which is additionally suitable for playing back digital media in which the number of media objects in the digital medium (12) and the number of products may be 0.

6. Apparatus for accessing digital media, having
- a playback unit (31) which can be used to play back the contents of a digital medium (12) in a playback area (320) and is set up to access the digital medium (12) to be played back via a first control unit (11), wherein the digital medium (12) is stored in a first storage unit (13),
and
- a second control unit (21) and a second storage unit (23), wherein information (22) relating to at least one media object, which is presented when playing back the digital medium (12), is stored in the second storage unit (23), wherein the information (22) comprises time-dependent position information relating to the media object during media playback, and the second storage unit (23) is accessed by means of the second control unit (21),
and
- a third control unit (26) and a third storage unit (25), wherein information (24) relating to at least one product is stored in the third storage unit (25), and the third storage unit (25) is accessed via the third control unit (26),
wherein the playback unit (31) is designed and provided
- for the purpose of accessing information relating to at least one media object, which is stored in the second storage unit (23), via the second control unit (21),
and
- for the purpose of accessing information relating to at least one product, which is stored in the third storage unit (25), via the third control unit (26),
and
- for the purpose of selecting a media object presented on the basis of its position information (22) when playing back the digital medium (12) by means of an input device (314, 316) and for the purpose of requesting product information (24) relating to the selected media object,
**characterized in that**
- the apparatus comprises a fourth control unit (28) and a fourth storage unit (27), wherein semantic information (271) relating to the at least one media object and semantic information (272) relating to the at least one product is available, which information is stored in the fourth storage unit (27) and can be accessed via the fourth control unit (28),
- with the result that precisely those products (24) whose semantic information (272) corresponds to the semantic information (271) relating to the selected media object with respect to an assignment method are offered.

7. Apparatus according to Claim 6 having the features of at least one of Claims 2 to 5.

8. Method for accessing digital media, in which a playback unit (31) which can be used to play back the contents of a digital medium (12) in a playback area (320) accesses the digital medium (12) to be played back via a first control unit (11), wherein the digital medium (12) is stored in a first storage unit (13),
and the playback unit (31)
- accesses information (22) relating to at least one media object, which is presented when playing back the digital medium (12), via a second control unit (21), wherein the information (22) is stored in a second storage unit (23) and comprises the time-dependent position of the media object during media playback,
- and accesses information (24) relating to at least one product via a third control unit (26), wherein the information (24) is stored in a third storage unit (25),
and a presented media object is selected by actuating an input device (314, 316) when playing back the digital medium (12) in order to request product information (24) relating to the selected media object,
**characterized in that**
- semantic information (271) relating to the at least one media object and semantic information (272) relating to the at least one product is provided, which information is stored in a fourth storage unit (27) and can be accessed via a fourth control unit (28),
- wherein precisely those products for which the semantic information (272) stored for the product and the semantic information (271) stored for the media object corresponds with respect to an assignment method are offered to a user (A) with their product information (24) if products for a selected media object are requested.

9. Method according to Claim 8, wherein the assignment method determines products which have the same features as the media object or at least similar semantic features to the media object.

10. Method according to one of Claims 8-9, wherein a semantic similarity search is carried out at the time of the product request from the user (A), the parameters of which similarity search are determined by the semantic features of the media object and by the assignment method.

11. Method according to one of Claims 8-10, wherein an ontology is defined and the semantic information (271, 272) is acquired on the basis of this ontology and the ontology is used to determine the assignment method.

12. Method according to Claim 10 in conjunction with Claim 11, wherein the semantic similarity search is based on the determination of the semantic distance between a selected media object and a product, wherein the semantic distance can be calculated on the basis of the feature and warranty characteristics of the media object and of the respective product on the basis of the ontology, and wherein the semantic distance is below a given threshold value.

13. Method according to one of Claims 8-12, wherein a user (A) can add selected media objects to a favourites list, and a complete list of all media objects contained in the digital medium (12) is available, and a user (A) is provided with a means which can be used by the user to access the favourites list and the complete list at any time during playback and in the event of an interruption or after completion of the playback of the digital medium (12), and the user (A) can access the media objects and the product information (24) assigned to each media object via the favourites list and via the complete list.

14. Method according to one of Claims 8-13, wherein a user (A) is provided with means for disseminating the digital medium (12), the playback unit (31), a media object, a favourites list and a complete list.

15. Method according to one of Claims 8-14, in which media objects with their position information (22) and semantic information (271) in a digital medium (12) are automatically detected, and the position information (22) is stored in the second storage unit (23) and the semantic information (271) is stored in the fourth storage unit (27).

## Revendications

1. Unité de reproduction (31) permettant de reproduire le contenu d'un média numérique (12) dans une zone de reproduction (320) et conçue pour accéder au média numérique (12) devant être reproduit par l'intermédiaire d'une première unité de commande (11), dans lequel le média numérique (12) est enregistré dans une première unité de mémoire (13), et
l'unité de reproduction (31) est conçue et prévue
- pour accéder par l'intermédiaire d'une deuxième unité de commande (21) à des informations (22) relatives à au moins un objet média représenté lors de la reproduction du média numérique (12), dans lequel les informations (22) sont enregistrées dans une deuxième unité de mémoire (23) et comprennent la position temporelle de l'objet média lors de la reproduction du média, et
- pour accéder par l'intermédiaire d'une troisième unité de commande (26) à des informations (24) relatives à au moins un produit, dans lequel les informations (24) sont enregistrées dans une troisième unité de mémoire (25) et
- pour sélectionner au moyen d'un dispositif d'entrée (314, 316) un objet média représenté lors de la reproduction du média numérique (12) sur la base des informations de position (22) et pour demander des informations de produits (24) relatives à l'objet média sélectionné,
**caractérisée en ce que**
- des informations sémantiques (271) relatives à l'au moins un objet média et des informations sémantiques (272) relatives à l'au moins un produit sont disponibles, lesquelles informations sont enregistrées dans une quatrième unité de mémoire (27) et sont accessibles par l'intermédiaire d'une quatrième unité de commande (28),
- de manière à ce que soient proposés exactement as produits (24) dont les informations sémantiques (272) concordent avec les informations sémantiques (271) de l'objet média sélectionné du point de vue d'un processus d'affectation.

2. Dispositif selon la revendication 1, dans lequel les objets média sont visualisés par leurs informations de position (22) sur un plan transparent (321) disposé au-dessus de la zone de reproduction de média (320) et sont accessibles à un utilisateur (A) par l'intermédiaire du dispositif d'entrée (314, 316).

3. Dispositif selon la revendication 1 ou 2, dans lequel la quatrième unité de mémoire (27) met à disposition des moyens de recherche de ressemblance sémantique.

4. Dispositif selon l'une des revendications précédentes, dans lequel l'unité de reproduction (31) est disposée sur un troisième système informatique (3) et des troisième et quatrième unités de commandes (11, 21, 26, 28) sont disposées, avec leurs unités de mémoire respectives (13, 23, 25, 27), sur au moins un autre système informatique (1, 2) et tous ces systèmes informatiques (1, 2, 3) sont interconnectés par l'intermédiaire d'un réseau.

5. Dispositif selon la revendication 1, qui est en outre approprié pour la reproduction de médias numériques pour lesquels le nombre des objets médias présents dans le média numérique (12) et le nombre des produits peuvent être égaux à 0.

6. Dispositif d'accès à des médias numériques, comportant
- une unité de reproduction (31) par l'intermédiaire de laquelle le contenu d'un média numérique (12) peut être reproduit dans une zone de reproduction (320) et qui est conçue pour accéder par l'intermédiaire d'une première unité de commande (11) au média numérique (12) devant être reproduit, dans lequel le média numérique (12) est enregistré dans une première unité de mémoire (13), et
- une deuxième unité de commande (21) ainsi qu'une deuxième unité de mémoire (23), dans lequel des informations (22) relatives à au moins un objet média qui est représenté lors de la reproduction du média numérique (12) sont enregistrées dans la deuxième unité de mémoire (23), dans lequel les informations (22) comprennent des informations de position temporelle relatives à l'objet média lors de la reproduction du média et la deuxième unité de mémoire (23) est accédée au moyen de la deuxième unité de commande (21), et
- une troisième unité de commande (26) ainsi qu'une troisième unité de mémoire (25), dans lequel des informations (24) relatives à au moins un produit sont enregistrées dans la troisième unité de mémoire (25) et la troisième unité de mémoire (25) est accédée par l'intermédiaire de la troisième unité de commande (26), dans lequel l'unité de reproduction (31) est conçue et prévue
- pour accéder par l'intermédiaire de la deuxième unité de commande (21) à des informations enregistrées dans la deuxième unité de mémoire (23) et relatives à au moins un objet média, et
- pour accéder par l'intermédiaire de la troisième unité de commande (26) à des informations enregistrées dans la troisième unité de mémoire (25) et relatives à au moins un produit, et
- pour sélectionner au moyen d'un dispositif d'entrée (314, 316) un objet média représenté sur la base de ses informations de position (22) lors de la reproduction du média numérique (12) et pour demander des informations de produits (24) relatives à l'objet média sélectionné,
**caractérisé en ce que**
- le dispositif comprend une quatrième unité de commande (28) ainsi qu'une quatrième unité de mémoire (27), dans lequel des informations sémantiques (271) relative à l'au moins un objet média et des informations sémantiques (272) relatives à l'au moins un produit sont disponibles, lesquelles informations sont enregistrées dans la quatrième unité de mémoire (27) et sont accessibles par l'intermédiaire de la quatrième unité de commande (28),
- de manière à ce que soient proposés exactement as produits (24) dont les informations sémantiques (272) correspondent aux informations sémantiques (271) de l'objet média sélectionné du point de vue d'un processus d'affectation.

7. Dispositif selon la revendication 6, présentant les caractéristiques d'au moins l'une des revendications 2 a 5.

8. Procédé d'accès à des médias numériques, dans lequel une unité de reproduction (31), par l'intermédiaire de laquelle le contenu d'un média numérique (12) peut être reproduit dans une zone de reproduction (320), accède par l'intermédiaire d'une première unité de commande (11) au média numérique (12) devant être reproduit, dans lequel le média numérique (12) est enregistré dans une première unité de mémoire (13),
et l'unité de reproduction (31)
- accède par l'intermédiaire d'une deuxième unité de commande (21) à des informations (22) relatives à au moins un objet média qui est représenté lors de la reproduction du média numérique (12), dans lequel les informations (22) sont enregistrées dans une deuxième unité de mémoire (23) et comprennent la position temporelle de l'objet média lors de la reproduction du média,
- et accède par l'intermédiaire d'une troisième unité de commande (26) à des informations (24) relatives à au moins un produit, dans lequel les informations (24) sont enregistrées dans une troisième unité de mémoire (25), et dans lequel un objet média représenté est sélectionné lors de la reproduction du média numérique (12) par actionnement d'un dispositif d'entrée (314, 316) afin de demander des informations de produits (24) relatives à l'objet média sélectionné,
**caractérisé en ce que**
- des informations sémantiques (271) relatives à l'au moins un objet média et des informations sémantiques (272) relatives à l'au moins un produit, qui sont enregistrées dans une quatrième unité de mémoire (27) sont fournies et sont accessibles par l'intermédiaire d'une quatrième unité de commande (28),
- dans lequel, lors de la demande de produits pour un objet média sélectionné, sont proposés à un utilisateur (A) exactement as produits avec leurs informations de produits (24) dont les informations sémantiques (272) enregistrées pour le produit concordent avec les informations sémantiques (271) enregistrées pour l'objet média du point de vue d'un processus d'affectation.

9. Procédé selon la revendication 8, dans lequel le processus d'affectation détermine des produits possédant des caractéristiques sémantiques identiques ou au moins semblables à celles de l'objet média.

10. Procédé selon l'une des revendications 8-9, dans lequel, à l'instant de la demande de produits par un utilisateur (A), il est procédé à une recherche de ressemblance sémantique dont les paramètres sont déterminés par les caractéristiques sémantiques de l'objet média et par le processus d'affectation.

11. Procédé selon l'une des revendications 8-10, dans lequel une ontologie est définie et les informations sémantiques (271, 272) sont détectées sur la base de ladite ontologie, l'ontologie étant utilisée pour établir le processus d'affectation.

12. Procédé selon la revendication 10 en association avec la revendication 11, dans lequel la recherche de ressemblance est fondée sur la détermination de la distance sémantique entre un objet média sélectionné est un produit, dans lequel la distance sémantique peut être calculée sur la base des valeurs caractéristiques et des garanties de l'objet média et du produit respectif en se fondant sur l'ontologie, et dans lequel la distance sémantique se situe en dessous d'une valeur de seuil donnée.

13. Procédé selon l'une des revendications 8-12, dans lequel un utilisateur (A) peut ajouter des objets média sélectionnés à une liste de favoris et une liste complète de tous les objets médias contenus dans le média numérique (12) est disponible, et il est fourni à un utilisateur (A) un moyen lui permettant d'accéder, à tout instant pendant la reproduction ainsi que lors d'une interruption ou après la fin de la reproduction du média numérique (12), à la liste de favoris et à la liste complète, et l'utilisateur (A) peut accéder par l'intermédiaire de la liste de favoris et de la liste complète aux objets médias et aux informations de produits (24) associées à chaque objet média.

14. Procédé selon l'une des revendications 8-13, dans lequel des moyens destinés à diffuser le média numérique (12), l'unité de reproduction (31), un objet média, une liste de favoris et une liste complète, sont fournis à un utilisateur (A).

15. Procédé selon l'une des revendications 8-14, dans lequel des objets média sont automatiquement identifiés dans un média numérique (12) à l'aide de leurs informations de position (22) et d'informations sémantiques (271) et les informations de position (22) sont enregistrés dans la deuxième unité de mémoire (23) et les informations sémantiques (271) sont enregistrés dans la quatrième unité de mémoire (27).
